# EUROPEAN PATENT APPLICATION

(11) **EP 3 643 534 A1**
(43) Date of publication of application: **29.04.2020**
(21) Application number: 18821279.9
(22) Date of filing: 22.05.2018
(51) Int. Cl.: B60C 15/06, B29D 30/50, B60C 5/00, B60C 15/04

(54) **PNEUMATIC TIRE AND PRODUCTION METHOD FOR PNEUMATIC TIRE**

(30) Priority: 19.06.2017 JP 2017119978
(71) Applicant: Bridgestone Corporation, Tokyo 104-8340 (JP)
(72) Inventor: HASEGAWA, Keiichi, Tokyo 104-8340 (JP)
(74) Representative: Oxley, Robin John George
(86) International application number: PCT/JP2018/019710
(87) International publication number: WO 2018/235501

(57) **Abstract**

Provided is a pneumatic tire comprising a pair of bead fillers located on opposite sides of a tire equatorial plane, comprising resin materials, respectively, and formed asymmetrically with each other relative to the tire equatorial plane.

## Description

### TECHNICAL FIELD

The present disclosure relates to a pneumatic tire, and a manufacturing method of the pneumatic tire.

This application is based upon and claiming the benefit of priority from Japanese Patent Application No. 2017-119978, filed in Japan on June 19, 2017, the entire content of which is incorporated herein by reference.

### BACKGROUND

Heretofore, a pneumatic tire has been suggested where a pair of rubber bead fillers located on opposite sides of a tire equatorial plane are formed asymmetrically with each other relative to the tire equatorial plane (e.g., Patent Literature 1). Since the bead fillers are formed asymmetrically to the tire equatorial plane, it is expected that a tire performance can improve.

### CITATION LIST

### Patent Literature

PTL 1: Japanese Patent Laid-Open No. 2013-086771

### SUMMARY

### (Technical Problem)

In the above described pneumatic tire, however, a rubber that forms a bead filler flows together with a surrounding rubber in a vulcanizing step during tire manufacturing, and as a result, there is concern that the configuration (a shape or the like) of the bead filler varies before and after the vulcanizing step. Consequently, in the manufactured tire, a desired asymmetric configuration of the bead filler may not be obtainable. Additionally, there is concern that a desired tire performance is not obtainable as an effect produced by the asymmetric configuration of the bead filler. Furthermore, the rubber that forms the bead filler flows during the vulcanizing step, and hence, there is a limit to the configuration (the shape or the like) of the bead filler obtained after the vulcanizing step. Additionally, the bead filler does not have a sufficient degree of freedom in design.

The present disclosure has been developed to solve the above described problems, and it is an object of the disclosure to provide a pneumatic tire and a manufacturing method of the pneumatic tire, in which a change in a configuration of a bead filler in a vulcanizing step during tire manufacturing can be inhibited and a desired asymmetric configuration of the bead filler can be obtained.

### (Solution to Problem)

According to the present disclosure, there is provided a pneumatic tire comprising a pair of bead fillers located on opposite sides of a tire equatorial plane, comprising resin materials, respectively, and formed asymmetrically with each other relative to the tire equatorial plane.

A manufacturing method of a pneumatic tire of the present disclosure is a manufacturing method of a pneumatic tire, comprising a vulcanizing step of vulcanizing an unvulcanized tire in a vulcanization mold, wherein in the unvulcanized tire, a pair of bead fillers located on opposite sides of a tire equatorial plane comprise resin materials, respectively, and are formed asymmetrically with each other relative to the tire equatorial plane.

### (Advantageous Effect)

According to the present disclosure, there can be provided a pneumatic tire, and a manufacturing method of the pneumatic tire, in which a change in a configuration of a bead filler in a vulcanizing step during tire manufacturing can be inhibited, and a desired asymmetric configuration of the bead filler can be obtained.

### BRIEF DESCRIPTION OF THE DRAWINGS

In the accompanying drawings:
FIG. 1 is a tire widthwise cross-sectional view illustrating a pneumatic tire according to an embodiment of the present disclosure;
FIG. 2 is an enlarged view of a main part of FIG. 1;
FIG. 3 is a view to explain a manufacturing method of the pneumatic tire according to the embodiment of the present disclosure, illustrating a state where an unvulcanized tire is accommodated in a vulcanization mold in a vulcanizing step, in a tire widthwise cross section of a tire half portion;
FIG. 4 is a tire widthwise cross-sectional view illustrating an enlarged main part of a pneumatic tire according to a first modification of the present disclosure;
FIG. 5 is a tire widthwise cross-sectional view illustrating an enlarged main part of a pneumatic tire according to a second modification of the present disclosure;
FIG. 6 is a tire widthwise cross-sectional view illustrating an enlarged main part of a pneumatic tire according to a third modification of the present disclosure;
FIG. 7A is a view to explain a manufacturing method of a bead core and a bead filler of FIG. 1, illustrating a state where an annular body is accommodated in an injection mold in an injection molding step, in an axial cross section of the annular body; and
FIG. 7B is a view illustrating the bead core and the bead filler that are obtainable in the injection molding step illustrated in FIG. 7A, in an axial cross section of the annular body.

### DETAILED DESCRIPTION

Hereinafter, embodiments of a pneumatic tire according to the present disclosure and a manufacturing method of the pneumatic tire will be illustrated and described with reference to the drawings.

The pneumatic tire according to the present disclosure and the manufacturing method of the pneumatic tire can be utilized in any type of pneumatic tire such as a passenger vehicle pneumatic tire.

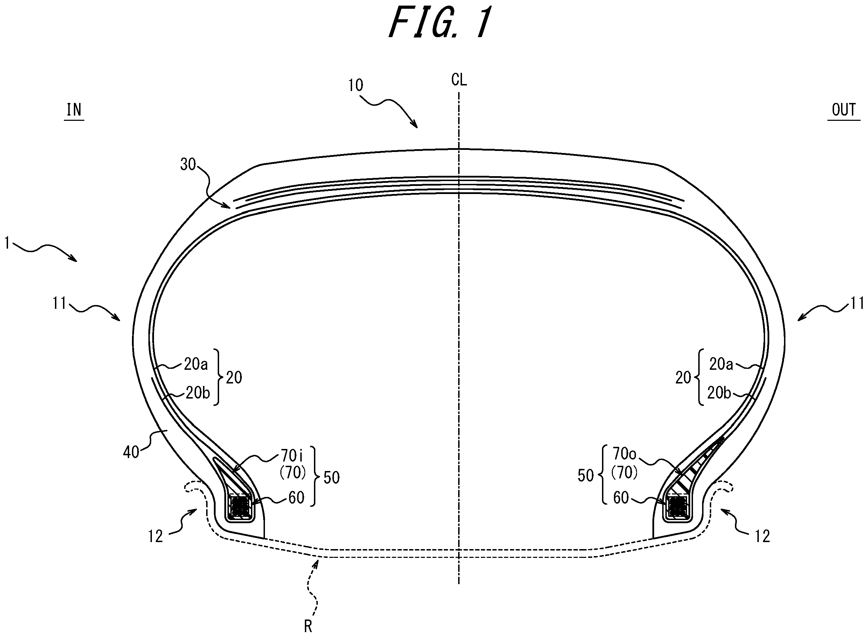

FIG. 1 to FIG. 3 are drawings to explain a pneumatic tire according to the present embodiment, and a manufacturing method of the pneumatic tire.

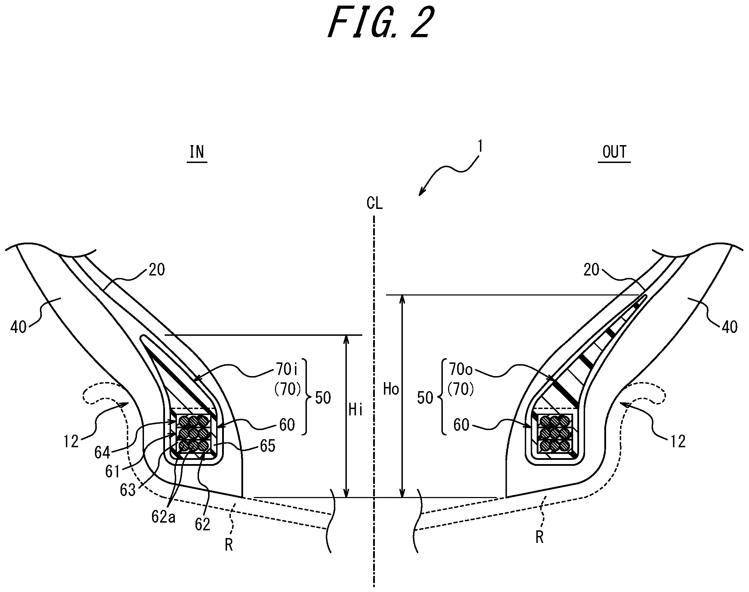

FIG. 1 is a tire widthwise cross-sectional view illustrating a pneumatic tire 1 according to the present embodiment. FIG. 2 is an enlarged view of FIG. 1, illustrating vicinities of bead portions 12 of the pneumatic tire 1. FIG. 1 and FIG. 2 illustrate a rim R to which the tire 1 is attached with a broken line for convenience.

In the present description, the "rim" indicates an approved rim in an applicable size (Measuring Rim in STANDARDS MANUAL of ETRTO, and Design Rim in YEAR BOOK of TRA) described or to be described in future in an industrial standard effective in a district where the tire is produced and used, for example, JATMA YEAR BOOK of JATMA (the Japan Automobile Tyre Manufacturers Association) in Japan, STANDARDS MANUAL of ETRTO (the European Tyre and Rim Technical Organization) in Europe, YEAR BOOK of TRA (the Tire and Rim Association, Inc.) in U.S. or the like (that is, the above "rim" also includes a size that can be included in the above industrial standard in future, in addition to the existing size. Examples of "the size to be described in future" include sizes described as "FUTURE DEVELOPMENTS" in 2013 edition of STANDARDS MANUAL of ETRTO). However, it is considered that a rim having a size that is not described in the above industrial standard is a rim having a width corresponding to a bead width of the tire.

The pneumatic tire 1 of the present embodiment has an interior structure formed asymmetrically relative to a tire equatorial plane CL. It is suitable that the pneumatic tire 1 has an installing direction to a vehicle designated, but the installing direction to the vehicle does not have to be designated.

In the present description, "the pneumatic tire" or an after-mentioned "unvulcanized tire" is also referred to simply as "the tire".

According to the present example, the installing direction of the tire 1 to the vehicle is designated. In the respective drawings, "OUT" indicates a vehicle-installed widthwise outside (the vehicle-installed outside) to the tire equatorial plane CL in a case where the tire 1 is installed to the vehicle, and "IN" indicates a vehicle widthwise inside (the vehicle-installed inside) to the tire equatorial plane CL in the case where the tire 1 is installed to the vehicle.

As illustrated in FIG. 1, the tire 1 of the present embodiment comprises a tread portion 10, a pair of sidewall portions 11 extending inwardly from opposite tire widthwise ends of the tread portion 10, respectively, in a tire radial direction, and a pair of bead portions 12 extending continuously from the sidewall portions 11, respectively, and inwardly in the tire radial direction.

In the example of FIG. 1, the tire 1 comprises a rubber 40, bead fillers 70, bead cores 60 each of which is located on an inner side of the bead filler 70 in the tire radial direction, a carcass 20, and a belt 30.

In each of the bead portions 12 of the tire 1, the bead core 60 and the bead filler 70 are embedded in the rubber 40. In the present example, the bead core 60 and the bead filler 70 form an integrally formed core-and-filler member 50. However, the bead core 60 may be separate from the bead filler 70.

In the example of FIG. 1, the carcass 20 including at least one carcass ply (one layer in the illustrated example) toroidally extends between a pair of bead cores 60 located on opposite sides of the tire equatorial plane CL. The carcass ply of the carcass 20 has, for example, a configuration where a cord made of steel, organic fibers or the like is coated with a rubber. In the illustrated example, the carcass 20 comprises a main body 20a toroidally extending between the pair of bead cores 60, and a pair of turn-up portions 20b each of which is turned up from an innermost end of the main body 20a in the tire radial direction toward an outer side around the bead core 60 in the tire width direction on each of the opposite sides of the tire equatorial plane CL. In the tread portion 10, the belt 30 comprising at least one belt layer (three layers in the illustrated example) is disposed on an outer side of a crown region of the carcass 20 in the tire radial direction.

However, the tire 1 of the present embodiment is not limited to the example of FIG. 1, and a configuration of another portion may be optional as long as the tire comprises at least the bead filler 70 disposed in the bead portion 12, and the rubber 40.

In the present description, in a pair of bead fillers 70 located on the opposite sides of the tire equatorial plane CL, one bead filler on one tire widthwise side of the tire equatorial plane CL (the vehicle-installed inside in the illustrated example) is also referred to as "a bead filler 70i", and the other bead filler on the other tire widthwise side of the tire equatorial plane CL (the vehicle-installed outside in the illustrated example) is also referred to as "a bead filler 70o".

As illustrated in FIG. 1 and FIG. 2, the pair of bead fillers 70 located on the opposite sides of the tire equatorial plane CL are formed asymmetrically with each other relative to the tire equatorial plane CL. The bead fillers 70 comprise resin materials, respectively.

For the pair of bead fillers 70 "formed asymmetrically with each other relative to the tire equatorial plane CL", it is indicated that a configuration of the bead filler 70i on one side in the tire width direction when inverted to the other side of the tire equatorial plane CL in the tire width direction does not completely match a configuration of the bead filler 70o on the other side in the tire width direction, and that the configurations are at least partially different. The "configuration" described here indicates a configuration when seen together with a shape and a material (the resin material).

For example, the respective shapes of the pair of bead fillers 70 may be asymmetric with each other relative to the tire equatorial plane CL. Furthermore, additionally or alternatively, materials (resin materials) that form the pair of bead fillers 70, respectively, may be different from each other.

In a case where it is determined whether or not "the shapes" are matched, dimensions are also included, and three-dimensional determination is performed. For example, in a case where the shapes are analogous to each other but is not congruent with each other, it is determined that "the shapes are different". In the determination as to whether or not "the materials" are matched, only main components are not compared, but a composition, mass, density, physical property and the like are also included, to perform the determination. Furthermore, if the bead filler 70 comprise a plurality of portions different in constituent material, a shape, position and material of each portion of the bead filler 70 are also included, to perform the determination.

In the example illustrated in FIG. 1 and FIG. 2, as described later, the shapes of the pair of bead fillers 70 are asymmetric with each other relative to the tire equatorial plane CL.

As illustrated in FIG. 2, in the present example, each of the pair of bead cores 60 located on the opposite sides of the tire equatorial plane CL includes a bead wire bundle 62, and a coating layer 65 surrounding a circumference of the bead wire bundle 62 and comprising the resin material, when seen in a tire widthwise cross section.

In the example illustrated in FIG. 1 and FIG. 2, the bead filler 70 is formed integrally with the coating layer 65 of the bead core 60, and comprises the same resin material as in the coating layer 65. However, the resin material that forms the bead filler 70 may be different from the coating layer 65 of the bead core 60. Furthermore, the resin material that forms the bead filler 70 may vary with each portion of the bead filler 70.

In the example of FIG. 2, when seen in a tire widthwise cross section, the bead wire bundle 62 of the bead core 60 only indicates a configuration where a plurality of cross sections of the bead wires 62a that form the bead core 60 appear, and an actual number of the bead wires 62a that form the bead core 60 may be one or more. That is, the bead wire bundle 62 may be formed by winding one bead wire 62a a plurality of times in a tire circumferential direction, or by winding each of a plurality of bead wires 62a once or a plurality of times in the tire circumferential direction.

Any known material may be used in the bead wire 62a and, for example, a steel cord may be used. The steel cord may comprise, for example, a steel monofilament or a stranded wire. Alternatively, organic fibers, carbon fibers or the like may be used.

The coating layer 65 of the bead core 60 extends continuously along the tire circumferential direction, and at least a part of the coating layer in the tire circumferential direction is formed in an annular shape to surround an entire circumference of the bead wire bundle 62 of the bead core 60, when seen in a tire widthwise cross section. The part of the coating layer 65 in the tire circumferential direction does not have to be annular, and may be formed in, for example, a C-shape or the like, when seen in the tire widthwise cross section.

In the present example, when seen in the tire widthwise cross section, each of the bead wires 62a is coated with a coating resin 63 comprising the resin material inside an annular shape formed by the coating layer 65. In other words, a clearance region between the coating layer 65 and each bead wire 62a is filled with the coating resin 63.

In the present example, the resin material that forms the coating resin 63 is different from the resin material that forms the coating layer 65. However, the resin material that forms the coating resin 63 may be the same as the resin material that forms the coating layer 65.

The present example is not restrictive. When seen in the tire widthwise cross section, each bead wire 62a may be coated with a coating rubber of a rubber in place of the coating resin 63 inside the annular shape formed by the coating layer 65. In other words, the clearance region between the coating layer 65 and each bead wire 62a may be filled with the coating rubber.

Furthermore, the coating layer 65 may be made of the rubber, or the coating layer 65 may be omitted.

In the present description, "the resin material" that forms the bead filler 70, the coating layer 65, the coating resin 63 and others indicates a material different from the rubber (an organic polymer material that exhibits rubber elasticity at normal temperature). The "resin material" hardly softens (preferably not at all) even at high temperatures for use in a vulcanizing step and can almost (preferably completely) maintain the shape. Furthermore, at normal temperature, "the resin material" is much harder (e.g., as much as hundred times to several hundreds of times) than the rubber 40 that forms the tire 1, and is lighter than the rubber 40 that forms the tire 1.

Specifically, as "the resin material", for example, a thermoplastic elastomer or a thermoplastic resin can be used. Furthermore, a resin that crosslinks by heat or an electron beam or a resin that cures by thermal dislocation can be used, but in consideration of elasticity required during running, it is preferable to use the thermoplastic elastomer.

Examples of the thermoplastic elastomer include polyolefin thermoplastic elastomer (TPO), polystyrene thermoplastic elastomer (TPS), polyamide thermoplastic elastomer (TPA), polyurethane thermoplastic elastomer (TPU), polyester thermoplastic elastomer (TPC), and dynamic crosslinking thermoplastic elastomer (TPV).

Examples of the thermoplastic resin include polyurethane resin, polyolefin resin, vinyl chloride resin, and polyamide resin.

Furthermore, as "the resin material", for example, a resin material can be used in which a deflection temperature under load (under a load of 0.45 MPa) prescribed in ISO75-2 or ASTM D648 is 78°C or more, a tensile yield strength prescribed in JIS K7113 is 10 MPa or more, and a tensile rupture elongation (JIS K7113) similarly prescribed in JIS K7113 is 50% or more. The "resin material" has a tensile elastic modulus (prescribed in JIS K7113:1995) of preferably 50 MPa or more, also preferably 1000 MPa or less. It is preferable that "the resin material" has a softening point higher than a predetermined vulcanization temperature for use in the vulcanizing step.

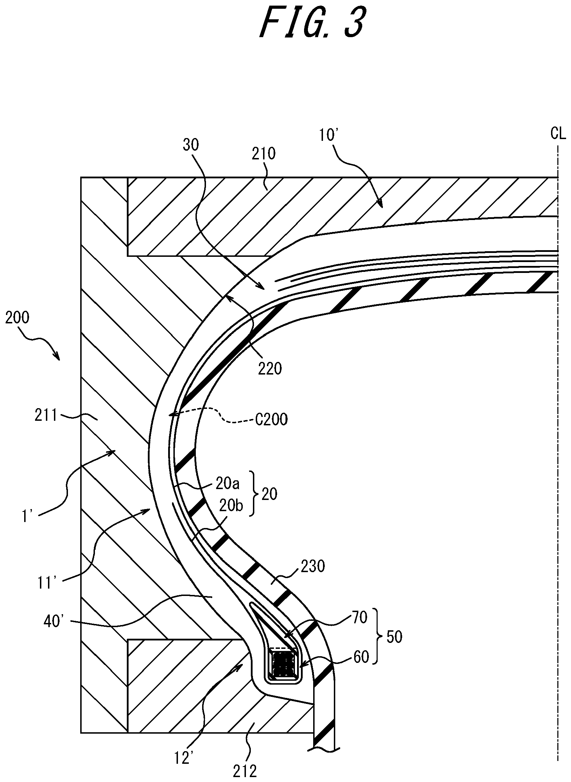

Next, description will be made as to a manufacturing method of the pneumatic tire of the present embodiment with reference to FIG. 3. The manufacturing method of the pneumatic tire of the present embodiment includes a vulcanizing step of vulcanizing an unvulcanized tire 1' in a vulcanization mold 200. The unvulcanized tire 1' is manufactured in an unvulcanized tire manufacturing step prior to the vulcanizing step.

FIG. 3 is an explanatory view of the manufacturing method of the pneumatic tire according to the present embodiment. The manufacturing method of the pneumatic tire of the present embodiment includes the vulcanizing step of vulcanizing the unvulcanized tire 1' in the vulcanization mold 200. The unvulcanized tire 1' is manufactured in the unvulcanized tire manufacturing step prior to the vulcanizing step. FIG. 3 illustrates a state where the unvulcanized tire is accommodated in the vulcanization mold in the vulcanizing step, in a tire widthwise cross section of a tire half portion. Note that the unvulcanized tire 1' in the vulcanizing step illustrated in FIG. 3 forms the tire 1 illustrated in FIG. 1 after the vulcanizing step.

The unvulcanized tire manufacturing step performed prior to the vulcanizing step includes a bead filler manufacturing step of manufacturing the bead filler 70, and an assembling molding step of assembling the bead filler 70 manufactured in the bead filler manufacturing step with another tire forming member to obtain the unvulcanized tire 1' (FIG. 3).

In the present example, in the bead filler manufacturing step, the bead filler 70 and the bead core 60 are integrally formed, to manufacture the core-and-filler member 50. However, in the bead filler manufacturing step, the bead filler 70 may be only manufactured. In this case, the bead core 60 may be separately manufactured in a bead core manufacturing step.

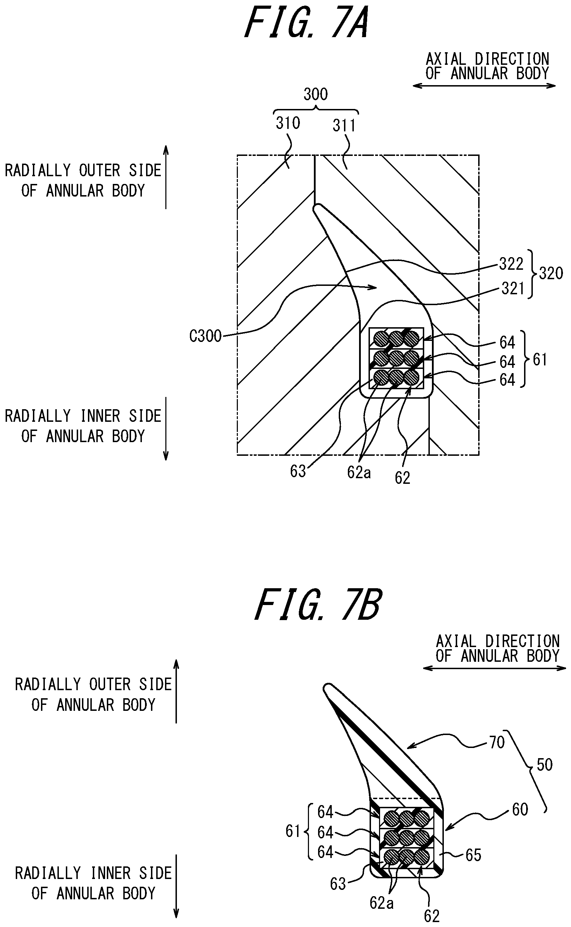

A manufacturing method of the core-and-filler member 50 will be described later in further detail with reference to FIG. 7A and FIG. 7B.

In the assembling molding step, the bead filler 70 (the core-and-filler member 50 in the present example) manufactured in the bead filler manufacturing step, an unvulcanized rubber 40' and the other tire forming members (the carcass 20, the belt 30 and others in the present example) are assembled and molded on, for example, a molding drum (not illustrated), to obtain the unvulcanized tire 1'. Furthermore, in the present example, in the assembling molding step, a tubular tire case (not illustrated) comprising some or all of the tire forming members is expanded by a bladder 230.

As illustrated in FIG. 3, the unvulcanized tire 1' obtainable by the assembling molding step comprises a tread portion 10', a pair of sidewall portions 11' extending inwardly from opposite tire widthwise ends of the tread portion 10' in the tire radial direction, and a pair of bead portions 12' extending continuously from the sidewall portions 11', respectively, and inwardly in the tire radial direction. The tread portion 10', the sidewall portions 11' and the bead portions 12' of the unvulcanized tire 1' form, after the vulcanizing step, the tread portion 10, the sidewall portions 11, and the bead portion 12 in the vulcanized tire 1 (FIG. 1).

Although not illustrated, in the present embodiment, a pair of bead fillers 70 located on the opposite sides of the tire equatorial plane CL in the unvulcanized tire 1' comprise resin materials, respectively, and are formed asymmetrically with each other relative to the tire equatorial plane CL. The pair of bead fillers 70 "formed asymmetrically with each other relative to the tire equatorial plane CL" are meant as described above.

In the bead portions 12' of the unvulcanized tire 1', the bead core 60 and the bead filler 70 are embedded in the unvulcanized rubber 40'. As described above, in the present example, the bead core 60 and the bead filler 70 form the integrally formed core-and-filler member 50. However, the bead core 60 may be separate from the bead filler 70.

In the vulcanizing step, the unvulcanized tire 1' obtained by the assembling molding step is vulcanized in the vulcanization mold 200.

As illustrated in FIG. 3, the vulcanization mold 200 has an inner surface that forms a tire outer surface molding surface 220 configured to mold an outer surface of the tire 1. More specifically, the vulcanization mold 200 comprises a plurality of vulcanization mold portions 210, 211, and 212, and each of inner surfaces of the respective vulcanization mold portions 210, 211, and 212 forms a part of the tire outer surface molding surface 220. In the illustrated example, the vulcanization mold 200 includes the tread vulcanization mold portion 210 configured to mold an outer surface of the tread portion 10 of the tire 1, the side vulcanization mold portion 211 configured to mold outer surfaces of parts of the sidewall portion 11 and the bead portion 12 of the tire 1, and the bead vulcanization mold portion 212 configured to mold an outer surface of the remaining portion of the bead portion 12 of the tire 1. However, the illustrated example is not restrictive, and the vulcanization mold 200 may comprise a plurality of optional vulcanization mold portions. In a state where the vulcanization mold portions 210, 211, and 212 are closed to one another, the tire outer surface molding surface 220 defines a cavity C200.

As illustrated in FIG. 3, during the vulcanizing step, the unvulcanized tire 1' is disposed in the cavity C200 of the vulcanization mold 200, and vulcanized and molded at a predetermined temperature while being pressed against the tire outer surface molding surface 220 by the bladder 230 disposed on a tire lumen side of the unvulcanized tire 1'.

During the vulcanizing step, the tire forming members comprising the resin material (the bead filler 70, and the coating layer 65 and the coating resin 63 of the bead core 60 in the present example) are hardly (preferably not at all) softened, deformed or moved, and shapes and positions are almost (preferably completely) maintained. Furthermore, if the bead filler 70 comprises a plurality of portions different in constituent material, the bead filler 70 has a material configuration and shape inhibited from being changed due to mutual mixing of the portions or the like. On the other hand, during the vulcanizing step, the unvulcanized rubber 40' flows through the cavity C200, and is then vulcanized while molding the respective tire outer surfaces by the tire outer surface molding surface 220.

After the vulcanizing step, the vulcanized pneumatic tire 1 (FIG. 1 and FIG. 2) is obtainable.

As described above, in the present embodiment, the pair of bead fillers 70 are formed asymmetrically with each other relative to the tire equatorial plane CL, so that respective configurations of respective tire half portions can vary. Additionally, a tire performance can improve as compared with a case where the respective tire half portions have the same configuration. In particular, in a case where the tire 1 has a designated installing direction to the vehicle as in the present example, configurations of the bead filler 70i of the vehicle-installed inside and the bead filler 70o of the vehicle-installed outside are set, respectively, in consideration of, for example, a difference in required performance, physical property or the like between the tire half portion of the vehicle-installed inside and the tire half portion of the vehicle-installed outside during cornering or the like. Consequently, it is possible to noticeably improve a performance of the whole tire.

Furthermore, in the present embodiment, the pair of bead fillers 70 comprises the resin material. Consequently, also at the high temperatures for use in the vulcanizing step during the tire manufacturing, the bead filler 70 can be noticeably inhibited from being softened or changed in shape. If the bead filler 70 comprises a plurality of portions that are different in constituent material, the bead filler 70 can be noticeably inhibited from being changed in material configuration or shape due to the mutual mixing of the portions or the like. In consequence, the configuration of the bead filler 70 can be constantly maintained before and after the vulcanizing step. Therefore, in the manufactured tire, a desired asymmetric configuration of the bead filler can be obtained more noticeably securely than conventional. Additionally, a desired tire performance can be obtained as an effect of the asymmetric configuration of the bead filler.

In addition, if the bead filler 70 comprises a rubber, the rubber that forms the bead filler flows during the vulcanizing step, and hence, there is a limit to the configuration (the shape or the like) of the bead filler obtainable after the vulcanizing step. On the other hand, in the present embodiment, the bead filler 70 comprises the resin material, and hence, the bead filler 70 can be formed, for example, in a special shape that cannot be formed with the rubber. This can noticeably increase a degree of freedom in design of the bead filler 70.

Furthermore, in the present example, the bead filler 70 comprises the resin material that has much more hardness and is harder to deteriorate than the rubber. Consequently, for example, as compared with a case where the bead filler 70 is made of the rubber, it is possible to noticeably inhibit collapse of the shape of the bead filler 70 due to use of the manufactured tire 1 over a long period of time. Thus, even after the use for the long period of time, a desired configuration of the bead filler is obtainable in each tire half portion. Additionally, the desired tire performance is obtainable. Alternatively, it is possible to miniaturize the bead filler 70 while maintaining durability of the bead filler 70 equally to a conventional durability.

Additionally, according to the present example, the bead filler 70 comprises the resin material that is lighter than the rubber. Consequently, for example, unlike the case where the bead filler 70 is made of the rubber, the tire 1 can have a reduced weight, and can additionally have a reduced rolling resistance and a reduced fuel consumption.

In addition, according to the present example, the coating layer 65 that coats the circumference of the bead wire bundle 62 of the bead core 60 comprises the resin material that hardly softens even in the vulcanizing step. Consequently, for example, unlike a case where the bead core 60 does not comprise the resin material and the bead wire bundle 62 is covered only with the rubber, a shape of the bead core 60 can be noticeably inhibited from being changed in the vulcanizing step. Consequently, deformation of the bead filler 70 located on an outer side of the bead core 60 in the tire radial direction in the vulcanizing step can be further effectively inhibited.

Furthermore, according to the present example, the coating layer 65 of the bead core 60 comprises the resin material that is much harder than the rubber. For example, unlike the case where the bead core 60 does not comprise the resin material and the bead wire bundle 62 is covered only with the rubber, it can be noticeably inhibited that the shape of the bead core 60 is collapsed by pulling the carcass 20 outwardly in the tire radial direction through an operation of the bladder 230 during the manufacturing. Additionally, the collapse of the shape of the bead core 60 due to the use of the manufactured tire 1 over the long period of time can be noticeably inhibited. Consequently, also after the use for the long period of time, a fitting property of the bead portion 12 of the tire 1 to the rim R can be highly maintained, and a dynamic performance and water tightness of the tire can be satisfactorily maintained. Alternatively, the durability of the bead core 60 can be maintained equally to that of a conventional bead core, while miniaturization of the bead core 60 is possible.

Additionally, according to the present example, the coating layer 65 of the bead core 60 comprises the resin material, and hence, the bead filler 70 can be formed integrally with the coating layer 65. This can increase rigidity and durability of the bead portion 12. In addition, in this case, it is not necessary to provide the manufacturing step of the bead core 60 separately from the manufacturing step of the bead filler 70. Furthermore, also in the assembling molding step of assembling the bead filler 70 with the other tire forming members, the bead core 60 and the bead filler 70 can be treated as one part, and a manufacturing property can improve.

In addition, according to the present example, a part of the bead core 60 comprises the resin material that is lighter than the rubber. Consequently, for example, unlike the case where the bead core 60 does not comprise the resin material and the bead wire bundle 62 is covered only with the rubber, the tire 1 can have the reduced weight, and can additionally have the reduced rolling resistance and the reduced fuel consumption.

Furthermore, according to the present example, each bead wire 62a is coated with the coating resin 63 inside the coating layer 65 of the bead core 60. Consequently, for example, unlike a case where each bead wire 62a is coated with the coating rubber inside the coating layer 65 of the bead core 60, the shape of the bead core 60 and additionally the shape of the bead filler 70 adjacent to this bead core can be further securely maintained during the manufacturing or during the use. Durability of the bead core 60 or the bead filler 70 can further improve, and the weight reduction and miniaturization of the tire 1 are further possible.

Note that in the tire 1 illustrated in FIG. 1 and FIG. 2 and the unvulcanized tire 1' illustrated in FIG. 3, the shapes of the pair of bead fillers 70 are asymmetric with each other relative to the tire equatorial plane CL. The pair of bead fillers 70 may comprise the same material or may comprise mutually different materials.

More specifically, in the present example, a tire radial height Ho of the bead filler 70o of the vehicle-installed outside relative to the tire equatorial plane CL is higher than a tire radial height Hi of the bead filler 70i of the vehicle-installed inside relative to the tire equatorial plane CL (i.e., Ho > Hi). Here, "the tire radial height Ho, Hi of the bead filler 70o, 70i" indicates a tire radial distance from an innermost end of the tire 1 in the tire radial direction to an outermost end of the bead filler 70o, 70i in the tire radial direction as illustrated in FIG. 2.

Furthermore, each of the bead fillers 70o and 70i comprises the resin material. Consequently, the tire radial height Ho, Hi of the bead filler 70o, 70i in the manufactured tire 1 can be noticeably inhibited from being changed from the tire radial height Ho, Hi in the unvulcanized tire 1', and the respective heights are obtainable as desired.

The tire radial height Ho of the bead filler 70o of the vehicle-installed outside is comparatively increased. Consequently, when a ground contact load is input in the vulcanized tire 1, deformation of the carcass 20 on a tire radially outer side of the bead filler 70o of the vehicle-installed outside can be effectively inhibited. Additionally, a steering stability of the tire 1 can improve. Furthermore, the tire radial height Hi of the bead filler 70i of the vehicle-installed inside is comparatively decreased. Consequently, when the ground contact load is input in the vulcanized tire 1, the carcass 20 on a tire radially outer side of the bead filler 70i of the vehicle-installed inside is easy to be freely deformed. Additionally, ride comfort of the tire 1 can be softened.

Thus, compatibility of a ride comfort performance with the steering stability can be more suitably achieved.

Note that in the vulcanized tire 1, "the tire radial height Ho, Hi of the bead filler 70o, 70i" is measured in a state where the tire 1 is attached to the rim R and the tire 1 charged with a predetermined internal pressure is charged with no load.

Here, "the predetermined internal pressure" indicates an air pressure (a maximum air pressure) corresponding to a maximum load capability of a single wheel in an applicable size and ply rating described in the above JATMA Year Book or the like. It is considered that a pressure having a size that is not described in the above industrial standard is an air pressure (the maximum air pressure) corresponding to the maximum load capability prescribed for each vehicle to which the tire is installed. Note that air mentioned here can be replaced with an inert gas such as a nitrogen gas or the like.

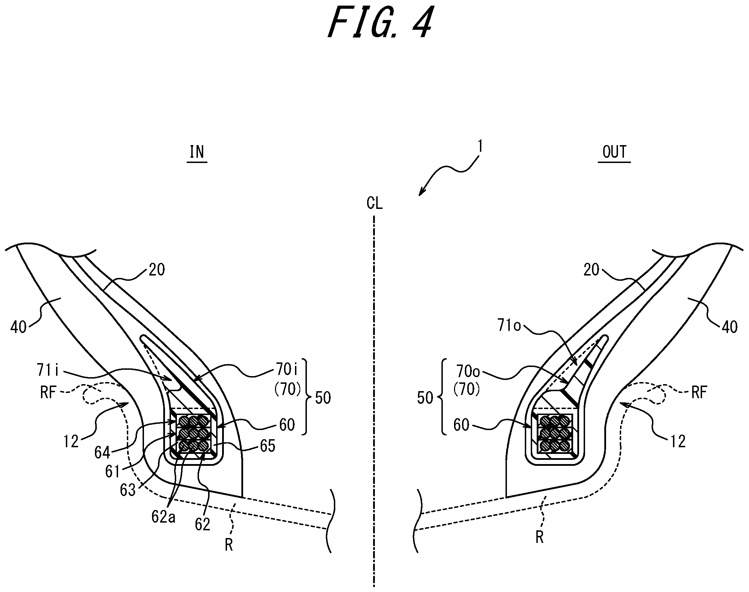

Next, a first modification of the present disclosure will be described with reference to FIG. 4. FIG. 4 is a view illustrating a tire 1 according to the first modification of the present disclosure, and corresponding to FIG. 2. A configuration of a pair of bead fillers 70 in an unvulcanized tire 1' according to the first modification is similar to a configuration of a pair of bead fillers 70 in the tire 1 illustrated in FIG. 4, and hence, depiction of the configuration is omitted.

In the tire 1, 1' of the first modification, shapes of the pair of bead fillers 70 are asymmetric with each other relative to a tire equatorial plane CL. The pair of bead fillers 70 may comprise the same material, or may comprise mutually different materials.

Furthermore, in the tire 1, 1' of the present example when seen in a tire widthwise cross section, each of a pair of bead fillers 70o and 70i has, in a surface of a vehicle-installed inside, a recess 71o, 71i hollowed out to open toward the vehicle-installed inside. As illustrated in FIG. 4, it is suitable that each of the recesses 71o and 71i is located at a tire radial position that overlaps with a tire radial outermost end of a rim flange RF in a state where the tire 1 is attached to a rim R. That is, in FIG. 4, the recess 71i in the bead filler 70i of the vehicle-installed inside is present on a rim flange RF side in the bead filler 70i. Furthermore, the recess 71o in the bead filler 70o of a vehicle-installed outside is present on a side opposite to the rim flangeRF in the bead filler 70o.

Additionally, each of the bead fillers 70o and 70i comprises a resin material. Consequently, shapes of the recesses 71o and 71i of the bead fillers 70o and 70i in the manufactured tire 1 can be noticeably inhibited from being changed from shapes of the recesses 71o and 71i in the unvulcanized tire 1', and are obtainable as desired, respectively.

Thus, a thick portion of the bead filler 70o of the vehicle-installed outside is disposed relatively close to the rim flange RF. Consequently, when a ground contact load is input in the vulcanized tire 1, movement of the thick portion of the bead filler 70o of the vehicle-installed outside is easy to be restrained by the rim flange RF. Therefore, a load support performance in a tire half portion of the vehicle-installed outside can improve, and a steering stability of the tire 1 can improve. Additionally, a thick portion of the bead filler 70i of the vehicle-installed inside is disposed comparatively away from the rim flange RF. Consequently, when the ground contact load is input in the vulcanized tire 1, movement of the thick portion of the bead filler 70i of the vehicle-installed inside is not so restrained by the rim flange RF. Therefore, a tire half portion of the vehicle-installed inside can be flexibly deformed, and ride comfort of the tire 1 can be softened.

Thus, compatibility of a ride comfort performance with the steering stability can be more suitably achieved.

Note that in the example of FIG. 4, shapes of the bead fillers 70o and 70i in a case where the recesses 71o and 71i are supposed to be filled with a resin material, that is, the shapes of the bead fillers 70o and 70i in a case where the surfaces of the bead filler 70o and 70i of the vehicle-installed inside are smoothly connected along opening surfaces of the recesses 71o and 71i to the vehicle-installed inside (shapes illustrated with partially broken lines in FIG. 4) are symmetric with each other relative to the tire equatorial plane CL.

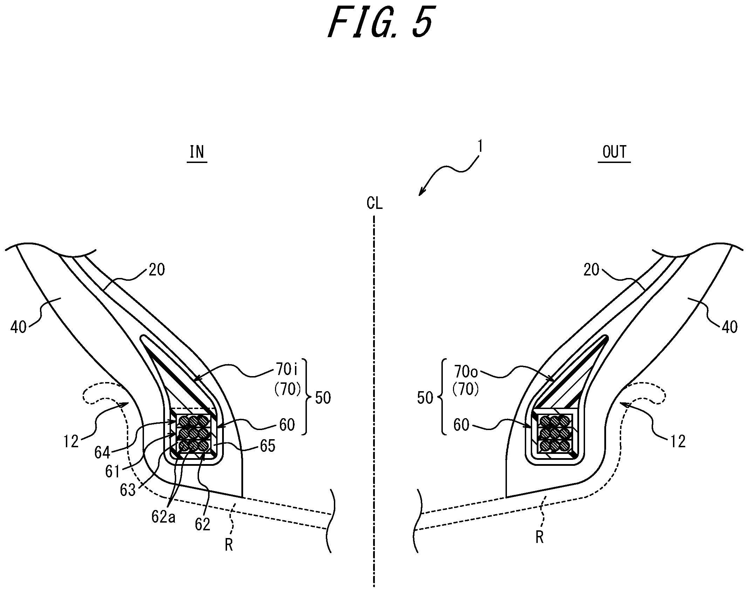

Next, a second modification of the present disclosure will be described with reference to FIG. 5. FIG. 5 is a view illustrating a tire 1 according to the second modification of the present disclosure, and corresponding to FIG. 2. A configuration of a pair of bead fillers 70 in an unvulcanized tire 1' according to the second modification is similar to a configuration of a pair of bead fillers 70 in the tire 1 illustrated in FIG. 5, and hence, depiction of the configuration is omitted.

In the tire 1, 1' of the second modification, resin materials that form the pair of bead fillers 70 are different from each other. Shapes of the pair of bead fillers 70 are symmetric with each other relative to a tire equatorial plane CL, but may be asymmetric with each other.

Furthermore, in the tire 1, 1' of the present example, a resin material that forms a bead filler 70o of a vehicle-installed outside relative to the tire equatorial plane CL has a higher tensile elastic modulus or a higher bend elastic modulus than a resin material that forms a bead filler 70i of a vehicle-installed inside relative to the tire equatorial plane CL.

Here, it is considered that "the tensile elastic modulus" of the resin material is measured in accordance with a prescription of JIS K7113:1995, and "the bend elastic modulus" is measured in accordance with a prescription of JIS K7171:2016.

Furthermore, the bead fillers 70o and 70i comprise the resin materials, respectively, and shapes of the bead fillers 70o and 70i in the manufactured tire 1 can be noticeably inhibited from being changed from shapes of the bead fillers 70o and 70i in the unvulcanized tire 1', and are obtainable as desired, respectively.

The tensile elastic modulus or the bend elastic modulus of the resin material of the bead filler 70o of the vehicle-installed outside is comparatively increased. Consequently, when a ground contact load is input in the vulcanized tire 1, deformation of a tire half portion of the vehicle-installed outside can be effectively inhibited. Additionally, a steering stability of the tire 1 can improve. Furthermore, the tensile elastic modulus or the bend elastic modulus of the resin material of the bead filler 70i of the vehicle-installed inside is comparatively decreased. Consequently, when the ground contact load is input in the vulcanized tire 1, a tire half portion of the vehicle-installed inside is easy to be freely deformed. Additionally, ride comfort of the tire 1 can be softened.

Therefore, compatibility of a ride comfort performance with the steering stability can be more suitably achieved.

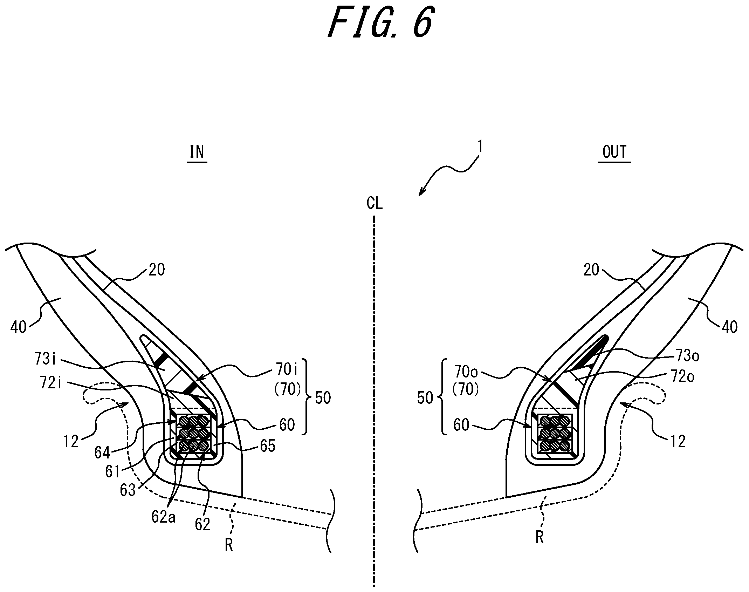

Next, a third modification of the present disclosure will be described with reference to FIG. 6. FIG. 6 is a view illustrating a tire 1 according to the third modification of the present disclosure, and corresponding to FIG. 2. A configuration of a pair of bead fillers 70 in an unvulcanized tire 1' according to the third modification is similar to a configuration of a pair of bead fillers 70 in the tire 1 illustrated in FIG. 6, and hence, depiction of the configuration is omitted.

In the tire 1, 1' of the third modification, resin materials that form the pair of bead fillers 70 are different from each other. Shapes of the pair of bead fillers 70 are symmetric with each other relative to a tire equatorial plane CL, but may be asymmetric with each other.

Furthermore, in the tire 1, 1' of the present example, a bead filler 70o of a vehicle-installed outside relative to the tire equatorial plane CL comprises a tire radially inner side portion 72o and a tire radially outer side portion 73o that are different in a forming material from each other. Furthermore, a bead filler 70i of a vehicle-installed inside relative to the tire equatorial plane CL comprises a tire radially inner side portion 72i and a tire radially outer side portion 73i that are different in a forming material from each other. Furthermore, when the tire radially inner side portions 72o and 72i of the bead fillers 70o and 70i, or the tire radially outer side portions 73o and 73i are compared with each other, materials are the same, but shapes are asymmetric to the tire equatorial plane CL.

Additionally, the resin material that forms the tire radially inner side portions 72o and 72i of the bead fillers 70o and 70i has a higher tensile elastic modulus or a higher bend elastic modulus than the resin material that forms the tire radially outer side portions 73o and 73i of the bead fillers 70o and 70i. Furthermore, when seen in a tire widthwise cross section, a ratio of an area of the tire radially inner side portion 72o to an area of the bead filler 70o of the vehicle-installed outside is higher than a ratio of an area of the tire radially inner side portion 72i to an area of the bead filler 70i of the vehicle-installed inside.

In addition, the bead fillers 70o and 70i comprise the resin materials, respectively. Consequently, entire shapes of the bead fillers 70o and 70i in the manufactured tire 1 and shapes of the respective portions 72o, 73o, 72i, and 73i in the manufactured tire 1 can be noticeably inhibited from being changed from respective shapes in the unvulcanized tire 1, and are obtainable as desired.

Furthermore, also in the present example, when a ground contact load is input in the vulcanized tire 1, deformation of a tire half portion of the vehicle-installed outside can be effectively inhibited. Additionally, a steering stability of the tire 1 can improve. In addition, when the ground contact load is input in the vulcanized tire 1, a tire half portion of the vehicle-installed inside is easy to be freely deformed. Additionally, ride comfort of the tire 1 can be softened.

Therefore, compatibility of a ride comfort performance with the steering stability can be more suitably achieved.

Here, an example of a method of manufacturing the bead core 60 and the bead filler 70 will be described in detail with reference to FIG. 7A and FIG. 7B. The manufacturing method of the bead core 60 and the bead filler 70 in this example is a method of manufacturing the core-and-filler member 50 illustrated in FIG. 2. However, in the present disclosure, the bead core 60 and the bead filler 70 may be manufactured by a method different from the method of the present example.

The manufacturing method of the core-and-filler member 50 in the present example includes an annular body forming step, an injection molding step, and a cooling step. FIG. 7A illustrates a behavior of the injection molding step, and FIG. 7B illustrates the core-and-filler member 50 obtained by a bead core manufacturing step.

Although depiction is omitted, in the annular body forming step, an annular body 61 is formed by winding a strip member 64 formed by coating one or more bead wires 62a with a coating resin 63. The annular body 61 illustrated in FIG. 7A is formed, for example, by spirally winding the strip member 64 formed by coating one or more (three in an illustrated example) bead wires 62a with the coating resin 63, and the strip member 64 almost rectangular in an axial cross section of the annular body 61 is laminated in three stacks in a radial direction of the annular body 61. Here, "the axial direction of the annular body 61" indicates a direction parallel to a central axis of an almost annular shape (a spiral shape) formed by the annular body 61. In this example, the number of the bead wires 62a arranged in the axial direction of the annular body 61 is three, but this case is not especially restrictive, and the number of the bead wires 62a may be one or more.

According to the present example, in the annular body forming step, an outer peripheral side of the bead wire 62a is coated with the molten coating resin 63, and cooled to solidify, thereby forming the strip member 64. A cross-sectional shape of the strip member 64 (the shape of a cross section orthogonal to an extending direction of the bead wire 62a) is almost rectangular in the present example, but is not limited to this example, and can be any other shape such as an almost parallelogram. The cross-sectional shape of the strip member 64 can be formed in a desired shape, for example, by use of an extruder. Furthermore, the annular body 61 can be formed by winding and stacking the strip member 64. Stacks are joined to each other, for example, by winding the strip member 64 while melting the coating resin 63 through hot plate welding or the like, and solidifying the molten coating resin 63. Alternatively, the stacks can be joined to each other by bonding with an adhesive or the like.

Subsequently to the annular body forming step, in the injection molding step, the annular body 61 formed in the annular body forming step is coated with a resin material, thereby forming the coating layer 65, and the bead filler 70 integral with the coating layer 65. Specifically, as illustrated in FIG. 7A, the annular body 61 formed in the above annular body forming step is disposed in a cavity C300 of an injection mold 300, and the heated and molten injection resin is injected from a gate (not illustrated) into the cavity C300. During this injection, the annular body 61 may be fixed to a predetermined position in the cavity C300 with a jig that is not illustrated.

In the present example, the injection mold 300 has an inner surface that forms a molding surface 320 configured to mold an outer surface of the core-and-filler member 50. More specifically, the injection mold 300 comprises a plurality of injection mold portions 310 and 311, and the respective injection mold portions 310 and 311 have inner surfaces that form parts of the molding surface 320, respectively. The molding surface 320 of the injection mold 300 comprises a coating layer molding surface 321 configured to mold an outer surface of the coating layer 65 of the bead core 60, and a filler molding surface 322 configured to mold an outer surface of the bead filler 70.

Subsequently to the injection molding step, in the cooling step, the coating layer 65 and the bead filler 70 are cooled to solidify. After the cooling step, the completed core-and-filler member 50 is removed from the injection mold 300. As illustrated in FIG. 7B, in the bead core 60 of the core-and-filler member 50, the annular body 61 has a configuration where the annular body 61 has a circumference coated with the solidified coating layer 65. Furthermore, the bead filler 70 is formed integrally with the coating layer 65 on a radially outer side of the coating layer 65.

According to the manufacturing method of the bead core of the present example, the stacked annular body 61 receives a force of thermal contraction generated by the coating layer 65 injected to the circumference of the annular body in the above cooling step. Consequently, the annular body 61 can be fastened with the surrounding coating layer 65. Then, the bead core 60 has a configuration where the circumference of the annular body 61 is coated with the solidified coating layer 65. Consequently, the solidified surrounding coating layer 65 can protect the annular body 61 against an external force such as a lateral force of the tire, and additionally, the annular body 61 can be fastened with the surrounding solidified coating layer 65, to inhibit collapse of the shape of the annular body 61. Therefore, the bead core 60 having a high durability is obtainable.

Furthermore, in the present example, the bead filler 70 is formed together with the coating layer 65. Consequently, it is not necessary to provide the manufacturing step of the bead core 60 separately from the manufacturing step of the bead filler 70. Additionally, also in the assembling molding step of assembling the bead filler with the other tire forming members, the bead core 60 and the bead filler 70 can be treated as one part, and a manufacturing property can improve.

However, the bead filler 70 may be manufactured by injection molding separately from the bead core 60, and may be bonded to the coating layer 65 of the bead core 60 by welding, or bonding with an adhesive or the like.

Note that from a viewpoint of more easily obtaining the bead core 60 having a high durability, it is preferable that the coating layer 65 comprises the same resin material as the coating resin 63. The reason is that the coating layer 65 and the coating resin 63 are easy to be welded or bonded.

On the other hand, from a viewpoint of easily adjusting a hardness of the bead core 60, it is preferable that the coating layer 65 comprises the resin material different from the coating resin 63. Here, as described above, "the resin material" described herein has a larger hardness than the rubber 40. Consequently, to decrease a difference in rigidity between the bead core 60 and the surrounding rubber 40, it is preferable that the coating layer 65 directly adjacent to the rubber 40 has a smaller hardness than the coating resin 63 (the hardness is close to that of the rubber 40).

Additionally, to further obtain an effect of the thermal contraction, it is preferable that the coating layer 65 has a larger hardness than the coating resin 63.

Alternatively, in the coating layer 65, it is preferable to use a resin material having a high adhesiveness to the rubber 40.

### INDUSTRIAL APPLICABILITY

A pneumatic tire according to the present disclosure and a manufacturing method of the pneumatic tire can be utilized in any type of pneumatic tire such as a passenger vehicle pneumatic tire.

### REFERENCE SIGNS LIST

- 1': unvulcanized tire (the tire)
- 1: pneumatic tire (the tire)
- 10' and 10: tread portion
- 11' and 11: sidewall portion
- 12' and 12: bead portion
- 20: carcass
- 20a: main body
- 20b: turn-up portion
- 30: belt
- 40': unvulcanized rubber
- 40: rubber
- 50: core-and-filler member
- 60: bead core
- 61: annular body
- 62a: bead wire
- 62: bead wire bundle
- 63: coating resin
- 64: strip member
- 65: coating layer
- 70, 70o, and 70i: bead filler
- 71o and 71i: recess
- 200: vulcanization mold
- 210, 211, and 212: vulcanization mold portion
- 220: tire outer surface molding surface
- 230: bladder
- 300: injection mold
- 310 and 311: injection mold portion
- 320: molding surface
- 321: coating layer molding surface
- 322: filler molding surface
- 651: tire radially inner side surface of the coating layer
- C200 and C300: cavity
- CL: tire equatorial plane
- R: rim
- RF: rim flange

## Claims

1. A pneumatic tire comprising:
a pair of bead fillers located on opposite sides of a tire equatorial plane, comprising resin materials, respectively, and formed asymmetrically with each other relative to the tire equatorial plane.

2. The pneumatic tire according to claim 1, wherein each of the pair of bead cores located on the opposite sides of the tire equatorial plane includes a bead wire bundle, and a coating layer surrounding a circumference of the bead wire bundle and comprising the resin material, when seen in a tire widthwise cross section.

3. The pneumatic tire according to claim 1 or 2, wherein the pair of bead fillers have respective shapes asymmetric with each other relative to the tire equatorial plane.

4. The pneumatic tire according to any one of claims 1 to 3, wherein the resin materials that form the pair of bead fillers are different from each other.

5. The pneumatic tire according to any one of claims 1 to 4, having an installing direction to a vehicle designated, wherein in the pair of bead fillers, a tire radial height of the bead filler of a vehicle-installed outside relative to the tire equatorial plane is higher than a tire radial height of the bead filler of a vehicle-installed inside relative to the tire equatorial plane.

6. The pneumatic tire according to any one of claims 1 to 5, having an installing direction to a vehicle designated, wherein when seen in a tire widthwise cross section, each of the pair of bead fillers includes a recess opened toward a vehicle-installed inside.

7. The pneumatic tire according to any one of claims 1 to 6, having an installing direction to a vehicle designated, wherein in the pair of bead fillers, the resin material that forms the bead filler of a vehicle-installed outside relative to the tire equatorial plane has a higher tensile elastic modulus or a higher bend elastic modulus than the resin material that forms the bead filler of a vehicle-installed inside relative to the tire equatorial plane.

8. A manufacturing method of a pneumatic tire, comprising:
a vulcanizing step of vulcanizing an unvulcanized tire in a vulcanization mold, wherein in the unvulcanized tire, a pair of bead fillers located on opposite sides of a tire equatorial plane comprise resin materials, respectively, and are formed asymmetrically with each other relative to the tire equatorial plane.
